# EUROPÄISCHE PATENTSCHRIFT

(11) **EP 1 378 700 B1**
(45) Veröffentlichungstag und Bekanntmachung des Hinweises auf die Patenterteilung: **19.07.2006**
(21) Anmeldenummer: 02405549.3
(22) Anmeldetag: 01.07.2002
(51) Int. Cl.: F16L 33/207, F16L 13/14

(54) **Verbindung zwischen einem Rohr und einem Fitting, Fitting für eine solche Verbindung sowie Verfahren für die Montage**
Connection between a pipe and a fitting, fitting for such connection and mounting method
Liaison entre un tuyau et un raccord de tuyau, raccord de tuyau pour une telle liaison et procédé de montage

(43) Veröffentlichungstag der Anmeldung: 07.01.2004
(73) Patentinhaber: GEBERIT TECHNIK AG, 8645 Jona (CH)
(72) Erfinder: Scholz, Jürg, 8841 Gross (CH); Wili, Hansruedi, 8645 Jona (CH); Heusser, Urs, 8625 Gossau (CH)
(74) Vertreter: Groner, Manfred

(56) Entgegenhaltungen:
- EP-A- 0 728 979
- AT-B- 402 095
- DE-C- 10 022 893
- DE-C- 19 735 919
- US-A- 5 140 738
- US-A- 5 772 262

## Beschreibung

Die Erfindung betrifft eine Verbindung zwischen einem Rohr und einem Fittinggemäss Oberbegriff des Anspruchs 1. Die Erfindung betrifft zudem einen Fitting zur Herstellung einer solchen Verbindung sowie ein Verfahren zur Herstellung der genannten Verbindung.

Verbindungen, bei denen ein Rohrende auf einen zylindrischen Abschnitt eines Fittings aufgepresst ist, sind in der Sanitärtechnik zur Herstellung von Wasserleitungen seit langem bekannt. Das Verpressen erfolgt mit einer Presszange, die von Hand oder motorisch betätigt wird. Beim Verpressen wird das anzuschliessende Rohrende plastisch verformt. Bekannt ist auch die Verwendung von Presshülsen, in welche das Rohr eingeschoben wird und die mit dem Rohr plastisch verformt werden. Eine Verbindung mit einer solchen Presshülse ist beispielsweise aus der EP 0 728 979 A1 bekannt. Bei dieser Verbindung wird die Presshülse mit einem Kunststoffring am Fitting fixiert. Dieser Kunststoffring ermöglicht das Vormontieren der Presshülse am Fitting. Bei der Herstellung der Verbindung muss dann lediglich das Rohr bis zu einem Anschlag in den Ringraum zwischen dem zylindrischen Abschnitt des Fittings und der Presshülse eingeschoben werden. Nach dem Einschieben wird die Presshülse verpresst, wobei das Rohr ebenfalls plastisch verformt wird. Die Presshülse ist insbesondere aus gedrücktem oder tiefgezogenem Metallblech und verhindert, dass sich das Rohr vom Fitting löst.
Bei der Montage solcher Verbindungen besteht insbesondere im Sanitärbereich die erhebliche Gefahr, dass bei nicht vollständig eingeschobenem Rohr verpresst wird. Da die Presshülse das aufgeschobene Ende des Rohres überdeckt, ist eine solche fehlerhafte Verpressung in der Regel visuell nicht erkennbar. Eine fehlerhafte Verpressung kann unmittelbar nach der Montage aber eventuell auch viel später undicht werden und hohe Bauschäden verursachen.

Die DE 197 35 919 C offenbart eine Anschlussvorrichtung für ein Rohr, die einen Fitting mit einer Vertiefung aufweist, in welche ein Halteelement aus Kunststoff eingelegt ist. Am Halteelement ist eine Presshülse aus Metall befestigt. Wird ein an den Fitting anzuschliessendes Rohr auf den Fitting aufgeschoben und damit in die Presshülse eingesetzt, so wird das Halteelement von einer Ausgangsstellung in eine Endstellung verschoben. Eine ungewollte Verschiebung soll durch einen Reibschluss zwischen dem Halteelement und dem Fitting vermieden sein. Anhand der Verschiebung des Halteelements soll erkennbar sein, dass das Rohr vorschriftsmässig auf den Fitting aufgeschoben ist und die radiale Verpressung der Presshülse durch ein an einem Führungsbund geführtes Presswerkzeug erfolgen kann.

Der Erfindung liegt die Aufgabe zugrunde, eine Verbindung der genannten Art zu schaffen, die eine sicherere Montage ermöglicht und die trotzdem bei einfacher und schneller Montage kostengünstig hergestellt werden kann.

Die Aufgabe ist bei einer gattungsgemässen Verbindung dadurch gelöst, dass das Sicherungselement vor dem Verpressen von einer ersten Position in eine zweite Position zu verschieben ist, wobei in der ersten Position die Presshülse das Sicherungselement gegen ein Verpressen sichert. Bei der erfindungsgemässen Verbindung verhindert das Sicherungselement in der ersten Position ein Verpressen der Presshülse und damit des Rohres. Damit ein Verpressen möglich ist, muss das Sicherungselement in die zweite Position bewegt werden. In dieser zweiten Position ist das Rohr bis zur vorgesehenen Einstecktiefe eingeschoben und kann verpresst werden. Ist das Rohr nicht in eine vorgesehene Tiefe eingeschoben, so kann das Sicherungselement nicht in die zweite Position verschoben werden. Damit ist auch ohne visuelle Kontrolle sichergestellt, dass beim Verpressen das Rohr in der vorgesehenen Position eingeschoben ist. Damit ist eine weitgehend automatische Sicherung gegeben, die auch unter schwierigen Baustellenbedingungen wirksam ist. Weitere Sicherungsmittel, beispielsweise ein Fenster in der Presshülse ist zusätzlich ohne weiteres möglich. Ein wesentlicher Vorteil der erfindungsgemässen Erfindung besteht auch darin, dass die genannten Sicherungsmittel keiner Anleitung oder Ausbildung bedürfen. Es sind zudem bei der Montage keine zusätzlichen Arbeitsschritte erforderlich.

Nach einer Weiterbildung der Erfindung ist vorgesehen, dass das Sicherungselement in der ersten Position lösbar und vorzugsweise entriegelbar an der Presshülse fixiert ist. Damit ist vermieden, dass das Sicherungselement sich versehentlich von der ersten Position lösen kann. Die Verriegelung erfolgt gemäss einer Weiterbildung der Erfindung mit einer Nase, welche eine Öffnung der Presshülse durchgreift. Beim Einschieben des Rohres wird diese Nase radial nach aussen angehoben und damit das Sicherungselement entriegelt.

Nach einer Weiterbildung der Erfindung ist das Sicherungselement ringförmig ausgebildet und auf der Aussenseite der Presshülse verschieblich gelagert. Nach dem Entriegeln kann dann das Sicherungselement bzw. der Ring von Hand einfach in die zweite Position verschoben werden. Grundsätzlich ist auch eine Ausführung denkbar, bei welcher das Sicherungselement durch das Rohr selbst oder dem Werkzeugzusatz verschoben wird.

Nach einer Weiterbildung der Erfindung ist vorgesehen, dass das Sicherungselement in seiner zweiten Position an einem Kragen des Fittings und an der Aussenseite der Presshülse anliegt und die Presshülse gegenüber dem Fitting abdichtet. Das Sicherungselement ist somit in der zweiten Position ein Dichtungsmittel. Damit ist insbesondere verhindert, dass Wasser an die Stirnfläche des Rohres gelangen kann. Insbesondere kann damit eine Korrosion bei Verbundrohren mit einem Kern aus Aluminium oder einem anderen Metall begrenzt werden.

Nach einer Weiterbildung der Erfindung ist vorgesehen, dass das Sicherungselement in der zweiten Position einen Anschlag für eine Presszange bildet. Damit ist eine exakte Verpressung gewährleistet.

Nach einer Weiterbildung der Erfindung ist vorgesehen, dass die Presshülse wenigstens einen Haken aufweist, der nach dem Verpressen in das Rohr eingreift. Damit kann das Rohrende der Presshülse verankert werden. Die Sicherheit der Verankerung ist dann noch weiter verbessert, wenn gemäss einer Weiterbildung der Erfindung vorgesehen ist, dass das Sicherungselement in der zweiten Position über den Haken geschoben ist und dieser Haken durch das Sicherungselement in der verankerten Position gehalten ist. Damit ist sichergestellt, dass das Rohrende vor dem Verpressen nicht mehr verschoben wird.

Die Verbindung eignet sich besonders für Wasserleitungen in der Haustechnik, wobei das Rohr ein Kunststoffrohr oder ein Verbundrohr mit einem Kern aus Aluminium oder einem anderen Metall ist.

Weitere vorteilhafte Merkmale ergeben sich aus den abhängigen Patentansprüchen, der nachfolgenden Beschreibung sowie der Zeichnung.

Es zeigen:
- Figur 1: ein Schnitt durch die erfindungsgemäss Verbindung,
- Figur 2: ein Schnitt durch einen Abschnitt der erfindungsgemässen Verbindung,
- Figur 3: ein Schnitt durch eine Presshülse entlang der Linie III-III der Figur 4,
- Figur 4: eine Ansicht der Presshülse,
- Figur 5: ein Schnitt durch einen Teil der Presshülse entlang der Linie V-V der Figur 3,
- Figur 6: ein Schnitt durch das Sicherungselement entlang der Linie VI-VI der Figur 7,
- Figur 7: eine Ansicht des Sicherungselementes und
- Figur 8: ein Schnitt durch einen Abschnitt des Sicherungselementes.

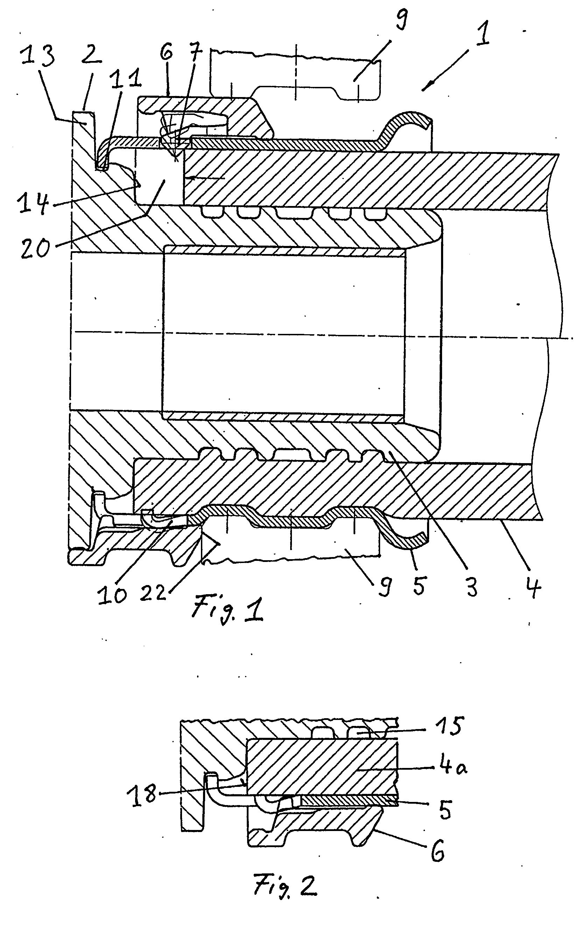

Die Figuren 1 und 2 zeigen eine Verbindung 1, die einen Fitting 2 aus Kunststoff oder Metall aufweist, von dem in diesen Figuren lediglich eine Hälfte gezeigt ist. Die andere nicht gezeigte Hälfte kann ebenfalls Mittel zur Herstellung einer Verbindung, beispielsweise einer Schraubverbindung oder Pressverbindung aufweisen. Der Fitting 2 weist einen zylindrischen Abschnitt 3 auf, der aussenseitig mehrere umlaufende Rillen 15 besitzt. In eine dieser Rillen 15 kann ein hier nicht gezeigter Dichtungsring eingelegt sein. Der Fitting 2 besitzt zudem einen umlaufenden Kragen 2 sowie eine Rille 11, in die eine Bördelung 12 einer Presshülse 5 eingreift. Die Presshülse 5 ist beispielsweise aus Blech und am Fitting 2 vorzugsweise vormontiert, wobei sie durch den Eingriff der Bündelung 12 in die Rille 11 festgelegt ist.

Zwischen der Presshülse 5 und der Aussenseite des zylindrischen Abschnittes 3 besteht vor dem Einschieben eines Rohres 4 ein umlaufender Zwischenraum 20. Die radiale Erstreckung dieses Zwischenraumes 20 entspricht im Wesentlichen der Dicke des Rohres 4.

Das Rohr 4 ist vorzugsweise ein Wasserrohr, insbesondere ein Kunststoffrohr oder ein Verbundrohr mit einem hier nicht gezeigten Kern aus Aluminium. Solche Rohre sind plastisch verformbar. Sie besitzen eine Stirnseite 18, an welcher der genannte Kern aus Aluminium hervortritt und entsprechend gegen Korrosion anfällig ist.

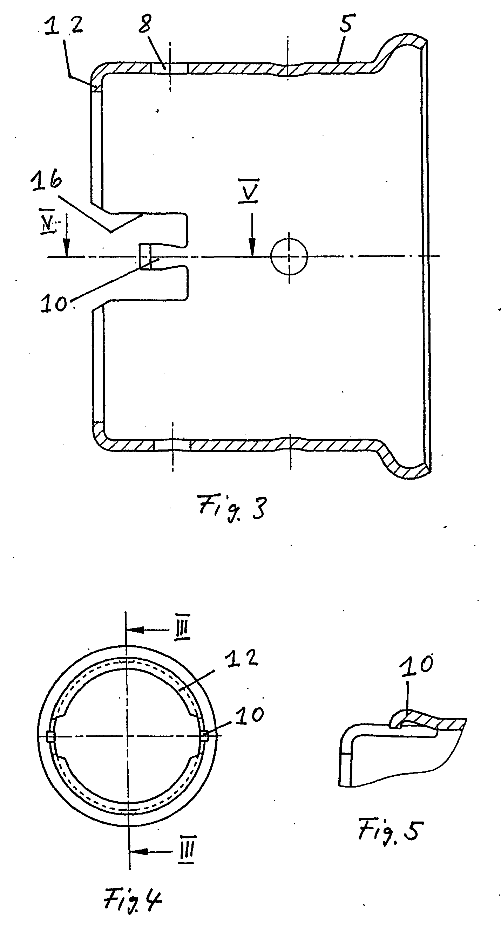

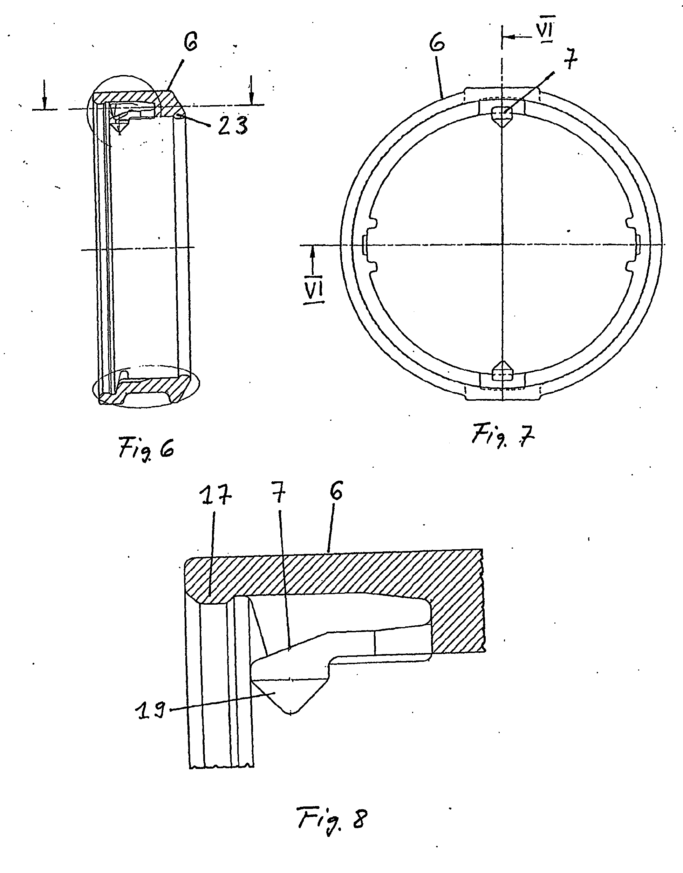

Auf die Presshülse 5 ist ein Sicherungselement 6 aufgesetzt, das im oberen Teil der Figur 1 in einer ersten Position an der Presshülse 5 verriegelt ist. Das ringförmig ausgebildete Sicherungselement 6 weist innenseitig wenigstens ein Haltemittel 7 auf, das als elastische Zunge ausgebildet ist und eine Nase 19 (Figur 8) aufweist, die eine Öffnung 8 (Figur 3) der Presshülse 5 durchgreift. Innenseitig steht diese Nase 19 vor, wie die Figur 1 erkennen lässt. Vorzugsweise sind zwei oder mehr solche Haltemittel 7 diametral gegenüberliegend angeordnet, wie dies in Figur 7 gezeigt ist. In der in Figur 1 oben gezeigten ersten Position ist das Sicherungselement 6 somit gegen eine Verschiebung auf der Presshülse 5 fixiert und insbesondere verriegelt. In der gezeigten ersten Position befindet sich das Sicherungselement 6 im Abstand zur Bördelung 12 und zwar in einer Position, in welcher die Presshülse 5 gegen ein Verpressen mittels einer hier lediglich angedeuteten Presszange 9 gesichert ist. Die Presszange 9 kann somit nicht an die Presshülse 5 angelegt werden, da das Sicherungselement 6 sich im Pressbereich befindet. Von aussen kann das Sicherungselement 6 nicht verschoben werden, da es wie erwähnt fixiert bzw. durch das Haltemittel 7 verriegelt ist.

Bei der Montage ist wie oben erwähnt die Presshülse 5 vorzugsweise am Fitting 2 vormontiert. Zum Herstellen der Verbindung wird das Rohr 4 in den Zwischenraum 20 eingeschoben. Wie in der oberen Hälfte der Figur 1 gezeigt, erreicht das Rohr 4 eine Position, in welcher die Stirnseite 18 auf die beiden Nasen 19 auftrifft. Wird das Rohr 4 weiter nach innen geschoben, so wird die Nase 19 radial nach aussen bewegt und damit wird das Sicherungselement 6 entriegelt. Selbstverständlich werden beide Nasen 19 gleichzeitig in die gelöste Position bewegt. Denkbar ist auch eine Ausführung, bei welcher mehr als zwei Haltemittel 7 bzw. Nasen 19 vorgesehen sind.

Die Haltemittel 7 sind so angeordnet, dass sich nach der Entriegelung das Rohr 4 in der vorgesehenen Stellung befindet, d.h. die Stirnseite 18 befindet sich an einer Anschlagfläche 14 des Fitting 2. Damit die Presshülse 5 verpresst werden kann, muss nun das Sicherungselement 6 in Figur 1 nach links in die in der unteren Hälfte gezeigte zweite Position verschoben werden. In dieser zweiten Position liegt das Sicherungselement 6 mit einem nach innen gerichteten Wulst 17 (Figur 8) aussenseitig am Kragen 13 an. Das Sicherungselement 6 liegt ferner mit einem weiteren Wulst 23 (Figur 6) an der Aussenseite der Presshülse 5 an. In der zweiten Position bildet das Sicherungselement 6 somit ein Dichtungselement und verhindert ein Eindringen von Wasser in den Bereich der Stirnfläche 18. In dieser zweiten Position befindet sich zudem eine umlaufende Fläche 22 in einer Position, in welcher diese einen Anschlag für die Presszange 9 bildet. In der Figur 1 ist in der unteren Hälfte der verpresste Zustand gezeigt. Wie ersichtlich liegt die Presszange 9 an der Fläche 22 an. Die Fläche 22 bestimmt damit die exakte Position der Presszange 9. Wie ersichtlich ist nach dem Verpressen die Presshülse 5 als auch das Rohr 4 im Bereich des zylindrischen Abschnittes 3 plastisch verformt.

An der Presshülse 5 sind zwei gegenüberliegende angeordnete Haken 10 angeordnet, die sich gemäss der Figur 3 in einer Ausnehmung 16 befinden und die nach dem Verpressen gemäss der Figur 1 in die Aussenseite des Rohres 4 eingedrückt sind. Das Eindrücken der Haken 10 in das Rohr 4 erfolgt beim Verschieben des Sicherungselementes 6 in die zweite Position. Die Figur 2 illustriert, die Position des Sicherungselementes 6 kurz vor dem Eindrücken der beiden Haken 10 in das Rohr 4.

Die beiden Ausnehmungen 16 bilden jeweils ein Fenster, durch welche die Position des Rohres 4 visuell kontrollierbar ist. Hierbei ist das Sicherungselement 6 in der ersten Position. Ist das Sicherungselement 6 in der zweiten Position, so ist die Ausnehmung 16 von diesem überdeckt. Grundsätzlich könnte aber das Sicherungselement 6 ein entsprechendes Fenster aufweisen, sodass eine visuelle Kontrolle auch nach dem Verpressen möglich ist. Wesentlich ist aber selbstverständlich eine visuelle Kontrolle vor dem Verpressen. Nachfolgend wird die Montage kurz erläutert.

Die Presshülse 5 ist wie bereits erwähnt am Fitting 2 vormontiert. Das Sicherungselement 6 befindet sich auf der Presshülse 5 in der ersten Position. Das Sicherungselement 6 ist somit ebenfalls vormontiert. Das Rohr 4 wird in den Zwischenraum 20 eingeschoben. Hierbei wird das Sicherungselement 6 entriegelt. Nach dem Einschieben kann durch die Ausnehmungen 16 visuell kontrolliert werden, ob die Stirnfläche 18 an der Fläche 14 anliegt. Anschliessend wird das Sicherungselement 6 von Hand in die zweite Position verschoben. Hierbei werden die beiden Haken 10 in das Rohr 4 eingepresst. Nun wird die Presshülse 5 mit der Presszange 9 verpresst, wobei die Fläche 22 als Anschlag für die Presszange 9 dient. Nach dem Verpressen ist die Verbindung hergestellt. Das Sicherungselement 6 kann durch Reibung oder ein hier nicht gezeigtes Rastmittel in der zweiten Position fixiert sein.

## Patentansprüche

1. Verbindung mit einem Rohr (4) und einem Fitting (2), der einen zylindrischen Abschnitt (3) aufweist, der in ein Ende des Rohres (4) eingreift und auf den dieses Ende aufgepresst ist, mit einer Presshülse (5), die am Fitting (2) vormontierbar ist und mit dem genannten Ende verpresst ist und mit einem Sicherungselement (6), das auf die Presshülse (5) aufgesetzt ist, wobei das Sicherungselement (6) vor dem Verpressen von einer ersten Position in eine zweite Position zu verschieben ist und in der ersten Position die Presshülse (5) durch das Sicherungselement (6) gegen ein Verpressen gesichert ist,**dadurch gekennzeichnet, dass** das Sicherungselement(6) in der genannten ersten Position lösbar und entriegelbar an der Presshülse (5) fixiert ist.

2. Rohrverbindung nach Anspruch 1, **dadurch gekennzeichnet, dass** das Sicherungselement (6) Haltemittel (7) aufweist, die beim Einschieben des Rohres (4) gelöst werden.

3. Verbindung nach Anspruch 1 oder 2, **dadurch gekennzeichnet, dass** das Sicherungselement (6) in seiner zweiten Position an einem Kragen (13) des Fitting (2) und an der Aussenseite der Presshülse (5) anliegt und die Presshülse (5) gegenüber dem Fitting (2) abdichtet.

4. Verbindung nach Anspruch 3, **dadurch gekennzeichnet, dass** das Sicherungselement (6) einen umlaufenden und nach innen gerichteten Dichtungswulst (17) aufweist, der am Kragen (13) dichtend anliegt.

5. Verbindung nach einem der Ansprüche 1 bis 4, **dadurch gekennzeichnet, dass** die Presshülse (5) an einem vorderen Rand eine nach innen gerichtete Bördelung (12) aufweist, die für eine Vormontage in eine umlaufende Rille (11) des Fittings (2) eingreift.

6. Verbindung nach einem der Ansprüche 1 bis 5, **dadurch gekennzeichnet, dass** die Presshülse (5) wenigstens ein hakenförmiges Element (10) aufweist, das zur Verankerung der Presshülse (5) in das Rohr (4) eingepresst ist.

7. Verbindung nach Anspruch 6, **dadurch gekennzeichnet, dass** das hakenförmige Element (10) an einem vorderen Ende der Presshülse (5) angeordnet ist.

8. Verbindung nach Anspruch 6 oder 7, **dadurch gekennzeichnet, dass** das Sicherungselement (6) über wenigstens ein hakenförmiges Element (10) geschoben ist und dieses in der verankerten Position fixiert.

9. Verbindung nach einem der Ansprüche 1 bis 8, **dadurch gekennzeichnet, dass** das Sicherungselement (6) beim Einschieben des Rohres (4) mit dem vorderen Ende des Rohres (4) entriegelt wird.

10. Verbindung nach einem der Ansprüche 1 bis 9, **dadurch gekennzeichnet, dass** das Sicherungselement (6) wenigstens eine Nase (19) aufweist, die elastisch am Sicherungselement (6) angeordnet ist und dieses in einer Ausnehmung (8) der Presshülse (5) fixiert.

11. Verbindung nach Anspruch 10, **dadurch gekennzeichnet, dass** die Nase (19) zum Entriegeln beim Einschieben des Rohres (4) durch dieses radial nach aussen bewegt wird.

12. Verbindung nach einem der Ansprüche 1 bis 11, **dadurch gekennzeichnet, dass** die Presshülse (5) wenigstens eine Ausnehmung (16) aufweist, die als Fenster zur visuellen Kontrolle der Position einer Stirnseite (18) des Rohres (4) vorgesehen ist.

13. Fitting mit einer Presshülse (5) zur Herstellung einer Verbindung, wobei die Presshülse (5) an diesem vormontiert ist und auf der Presshülse (5) ein Sicherungselement (6) in einer ersten Position angeordnet ist, in der die Presshülse (5) gegen ein Verpressen gesichert ist, **dadurch gekennzeichnet, dass** das Sicherungselement (6) Haltemittel (7) aufweist, die beim Einschieben eines Rohres (4) in die Presshülse gelöst und entriegelt werden, so dass das Sicherungselement (6) von der ersten Position in eine zweite Position verschiebbar ist.

14. Fitting nach Anspruch 13, **dadurch gekennzeichnet, dass** das Sicherungselement (6) als Ring ausgebildet ist.

15. Fitting nach Anspruch 13 oder 14, **dadurch gekennzeichnet, dass** das Sicherungselement (6) Dichtungsmittel (17, 22) aufweist, die nach dem Verpressen die Presshülse (5) gegenüber einem Kragen (13) des Fittings (2) abdichten.

16. Fitting nach einem der Ansprüche 13 bis 15, **dadurch gekennzeichnet, dass** die Presshülse (5) eine Bördelung (12) aufweist, die in eine Rille (11) des Fittings (2) eingreift.

17. Fitting nach einem der Ansprüche 13 bis 16, **dadurch gekennzeichnet, dass** die Presshülse (5) wenigstens ein Fenster (16) aufweist.

18. Verfahren zur Herstellung einer Verbindung nach Anspruch 1, **gekennzeichnet durch** folgende Schritte:
a) Einschieben eines Rohres (4) in den Zwischenraum (20) zwischen Presshülse (5) und zylindrischem Abschnitt (3), wobei in einer vorbestimmten Einstecktiefe das Sicherungselement (6) **durch** das vordere Ende des Rohres (4) gelöst wird,
b) Verschieben des Sicherungselementes (6) in seine zweite Position,
c) Verpressen der Presshülse (5).

19. Verfahren nach Anspruch 18, **dadurch gekennzeichnet, dass** beim Verpressen eine Presszange (9) verwendet wird und diese beim Verpressen am Sicherungselement (6) geführt ist.

## Claims

1. Connection comprising a pipe (4) and a fitting (2) with a cylindrical portion (3) which extends through an end of the pipe (4) and is compressed onto this end, having a pressing sleeve (5) which can be preassembled on the fitting (2) and by means of which said end is compressed, and having a locking element (6) which is placed on the pressing sleeve (5), and the locking element (6) must be moved from a first position into a second position prior to compression, and the pressing sleeve (5) is locked by the locking element (6) in the first position in order to prevent compression, **characterised in that** the locking element (6) is secured on the pressing sleeve (5) so that it can be released and unlocked in said first position.

2. Pipe connection as claimed in claim 1, **characterised in that** the locking element (6) has retaining means (7), which are released as the pipe (4) is inserted.

3. Connection as claimed in claim 1 or 2, **characterised in that** the locking element (6) lies against a collar (13) of the fitting (2) and on the external face of the pressing sleeve (5) in its second position and the pressing sleeve (5) affords a seal with respect to the fitting (2).

4. Connection as claimed in claim 3, **characterised in that** the locking element (6) has a peripherally extending and inwardly directed sealing bead (17), which sits against the collar (13) forming a seal.

5. Connection as claimed in one of claims 1 to 4, **characterised in that** the pressing sleeve (5) has an inwardly directed flange (12) on a front edge, which engages in a peripherally extending groove (11) of the fitting (2) to permit pre-assembly.

6. Connection as claimed in one of claims 1 to 5, **characterised in that** the pressing sleeve (5) has at least one hook-shaped element (10), which is pressed into the pipe (4) in order to anchor the pressing sleeve (5).

7. Connection as claimed in claim 6, **characterised in that** the hook-shaped element (10) is disposed on a front end of the pressing sleeve (5).

8. Connection as claimed in claim 6 or 7, **characterised in that** the locking element (6) is pushed beyond at least one hook-shaped element (10) and is fixed in the anchored position.

9. Connection as claimed in one of claims 1 to 8, **characterised in that** the locking element (6) is released as the pipe (4) is inserted by the front end of the pipe (4).

10. Connection as claimed in one of claims 1 to 9, **characterised in that** the locking element (6) has at least one lug (19), which is elastically disposed on the locking element (6) and fixes it in a cut-out (8) of the pressing sleeve (5).

11. Connection as claimed in claim 10, **characterised in that** the lug (19) is moved radially outwards by the pipe (4) as it is inserted.

12. Connection as claimed in one of claims 1 to 11, **characterised in that** the pressing sleeve (5) has at least one cut-out (16), which is provided as a window for visually checking the position of an end face (18) of the pipe (4).

13. Fitting with a pressing sleeve (5) for establishing a connection, which pressing sleeve (5) is preassembled thereon and a locking element (6) is disposed on the pressing sleeve (5) in a first position in which the pressing sleeve (5) is prevented from being compressed, **characterised in that** the locking element (6) has retaining means (7) which are released and unlocked when a pipe (4) is pushed into the pressing sleeve so that the locking element (6) can be moved from the first position into a second position.

14. Fitting as claimed in claim 13, **characterised in that** the locking element (6) is provided in the form of a ring.

15. Fitting as claimed in claim 13 or 14, **characterised in that** the locking element (6) has sealing means (17, 22) which seal the pressing sleeve (5) with respect to a collar (13) of the fitting (2) after compression.

16. Fitting as claimed in one of claims 13 to 15, **characterised in that** the pressing sleeve (5) has a flange (12) which engages in a groove (11) of the fitting (2).

17. Fitting as claimed in one of claims 13 to 16, **characterised in that** the pressing sleeve (5) has at least one window (16).

18. Method of establishing a connection as claimed in claim 1, **characterised by** the following steps:
a) a pipe (4) is inserted in the intermediate space (20) between the pressing sleeve (5) and cylindrical portion (3), and the locking element (6) is released by the front end of the pipe (4) at a pre-defined insertion depth,
b) the locking element (6) is moved into a second position,
c) the pressing sleeve (5) is compressed.

19. Method as claimed in claim 18, **characterised in that** a pressing jaw (9) is used for the compression process and it is guided on the locking element (6) during compression.

## Revendications

1. Connexion avec un tuyau (4) et un raccord (2), qui présente une portion cylindrique (3) qui vient en prise dans une extrémité du tuyau (4) et sur lequel est pressée cette extrémité, avec une douille de pressage (5) qui peut être prémontée sur le raccord (2) et qui est comprimée avec ladite extrémité et avec un élément de fixation (6), qui est placé sur la douille de pressage (5), l'élément de fixation (6) devant être déplacé avant la compression d'une première position dans une deuxième position et dans la première position, la douille de pressage (5) étant protégée par l'élément de fixation (6) contre toute compression, **caractérisée en ce que** l'élément de fixation (6) est fixé de manière desserrable et déverrouillable dans ladite première position sur la douille de pressage (5).

2. Connexion de tuyau selon la revendication 1, **caractérisée en ce que** l'élément de fixation (6) présente des moyens de retenue (7) qui sont desserrés lors de l'enfoncement du tuyau (4).

3. Connexion selon la revendication 1 ou 2, **caractérisée en ce que** l'élément de fixation (6) s'applique dans sa deuxième position contre un rebord (13) du raccord (2) et contre le côté extérieur de la douille de pressage (5) et étanchéifie la douille de pressage (5) vis-à-vis du raccord (2).

4. Connexion selon la revendication 3, **caractérisée en ce que** l'élément de fixation (6) présente un bourrelet d'étanchéité (17) périphérique et orienté vers l'intérieur, qui s'applique de manière hermétique contre le rebord (13).

5. Connexion selon l'une quelconque des revendications 1 à 4, **caractérisée en ce que** la douille de pressage (5) présente sur un bord avant un repli (12) orienté vers l'intérieur, qui vient en prise pour un prémontage dans une gorge périphérique (11) du raccord (2).

6. Connexion selon l'une quelconque des revendications 1 à 5, **caractérisée en ce que** la douille de pressage (5) présente au moins un élément en forme de crochet (10) qui est pressé dans le tuyau (4) pour ancrer la douille de pressage (5).

7. Connexion selon la revendication 6, **caractérisée en ce que** l'élément en forme de crochet (10) est disposé sur une extrémité avant de la douille de pressage (5).

8. Connexion selon la revendication 6 ou 7, **caractérisée en ce que** l'élément de fixation (6) est poussé par-dessus au moins un élément en forme de crochet (10) et le fixe dans la position ancrée.

9. Connexion selon l'une quelconque des revendications 1 à 8, **caractérisée en ce que** l'élément de fixation (6) est déverrouillé lors de l'enfoncement du tuyau (4) avec l'extrémité avant du tuyau (4).

10. Connexion selon l'une quelconque des revendications 1 à 9, **caractérisée en ce que** l'élément de fixation (6) présente au moins un nez (19) qui est disposé élastiquement sur l'élément de fixation (6) et qui le fixe dans un évidement (8) de la douille de pressage (5).

11. Connexion selon la revendication 10, **caractérisée en ce que** le nez (19), pour le déverrouillage lors de l'enfoncement du tuyau (4), est déplacé radialement vers l'extérieur par ce dernier.

12. Connexion selon l'une quelconque des revendications 1 à 11, **caractérisée en ce que** la douille de pressage (5) présente au moins un évidement (16) qui est prévu comme fenêtre pour le contrôle visuel de la position d'un côté frontal (18) du tuyau (4).

13. Raccord comprenant une douille de pressage (5) pour la création d'une connexion, la douille de pressage (5) étant prémontée sur celui-ci et un élément de fixation (6) étant disposé sur la douille de pressage (5) dans une première position dans laquelle la douille de pressage (5) est protégée contre une compression, **caractérisé en ce que** l'élément de fixation (6) présente des moyens de retenue (7) qui lors de l'enfoncement d'un tuyau (4) dans la douille de pressage sont desserrés et déverrouillés, de sorte que l'élément de fixation (6) puisse être déplacé de la première position dans une deuxième position.

14. Raccord selon la revendication 13, **caractérisé en ce que** l'élément de fixation (6) est réalisé sous forme de bague.

15. Raccord selon la revendication 13 ou 14, **caractérisé en ce que** l'élément de fixation (6) présente des moyens d'étanchéité (17, 22) qui, après la compression, étanchéifient la douille de pressage (5) vis-à-vis d'un rebord (13) du raccord (2).

16. Raccord selon l'une quelconque des revendications 13 à 15, **caractérisé en ce que** la douille de pressage (5) présente un repli (12) qui vient en prise dans une gorge (11) du raccord (2).

17. Raccord selon l'une quelconque des revendications 13 à 16, **caractérisé en ce que** la douille de pressage (5) présente au moins une fenêtre (16).

18. Procédé de fabrication d'une connexion selon la revendication 1, **caractérisé par** les étapes suivantes :
a) enfoncement d'un tuyau (4) dans l'espace intermédiaire (20) entre la douille de pressage (5) et la portion cylindrique (3), l'élément de fixation (6), à une profondeur d'enfoncement prédéterminée, étant libéré par l'extrémité avant du tuyau (4),
b) déplacement de l'élément de fixation (6) dans sa deuxième position,
c) compression de la douille de pressage (5).

19. Procédé selon la revendication 18, **caractérisé en ce que** lors de la compression, une pince de pressage (9) est utilisée et celle-ci est guidée lors de la compression contre l'élément de fixation (6).
